**Europäisches Patentamt**

**European Patent Office**

**Office européen des brevets**

(19)

(11) Veröffentlichungsnummer: **0 344 416 B1**

# EUROPÄISCHE PATENTSCHRIFT

(12)

(45) Veröffentlichungstag der Patentschrift: **30.12.92**

(51) Int. Cl.⁵: **B60K  20/02**

(21) Anmeldenummer: **89104687.2**

(22) Anmeldetag: **16.03.89**

(54) Gangschaltvorrichtung für ein Kraftfahrzeug-Getriebe.

(30) Priorität: **27.05.88 DE 3817990**

(43) Veröffentlichungstag der Anmeldung:
**06.12.89 Patentblatt  89/49**

(45) Bekanntmachung des Hinweises auf die
Patenterteilung:
**30.12.92 Patentblatt  92/53**

(84) Benannte Vertragsstaaten:
**DE FR GB IT**

(56) Entgegenhaltungen:
**DE-A- 2 533 642**
**FR-A- 2 217 943**

(73) Patentinhaber: **Dr.Ing.h.c. F. Porsche Aktiengesellschaft
Porschestrasse 42
W-7000 Stuttgart 40(DE)**

(72) Erfinder: **Müller, Robert, Dipl.-Ing.
Badstrasse 21
W-7251 Mönsheim(DE)**
Erfinder: **Wacker, Bernd, Dipl.-Ing.
Lerchenweg 27
W-7251 Weissach(DE)**

**Beschreibung**

Die Erfindung betrifft eine Gangschaltvorrichtung nach dem Oberbegriff des Anspruchs 1.

Aus der gattungs gemässen DE-OS 25 33 642 ist eine Gangschaltvorrichtung bekannt, bei der ein Schalthebel an seinem unteren Ende in einem Kugelgelenk ortsfest, allseitig schwenkbar, gelagert ist. Oberhalb dieser Lagerung ist eine zum Getriebe führende Schaltstange so an den Schalthebel angelenkt, daß dieser innerhalb der Vorwählgasse des Getriebes quer zur Fahrtrichtung und zum Einlegen der Gänge in Fahrtrichtung bewegt werden kann.

Der vorliegenden Erfindung liegt die Aufgabe zugrunde, einen Schalthebel in einem eng begrenzten Bauraum, z.B. in einem engen Transaxlerohr so anzuordnen, daß mit geringen Bewegungen des Schalthebels über eine am Schalthebel befestigte Schaltstange alle Gänge eines Getriebes geschaltet werden können. Außerdem sollen getriebeseitig auf den Schalthebel einwirkende Schwingungen gedämpft werden.

Die kennzeichnenden Merkmale des Anspruchs 1 lösen diese Aufgabe erfindungsgemäß.

Eine vorteilhafte Ausbildung der Erfindung ist in den Unteransprüchen benannt.

Mit der vorgenannten Erfindung ist es möglich, einen Schalthebel in einem eng begrenzten Bauraum anzuordnen, so daß mit geringen Schaltbewegungen alle Gänge geschaltet werden können. Weiterhin ist der Schalthebel der Gangschaltvorrichtung leichtgängig, dauerhaft geschmiert und schwingungsabgekoppelt gelagert.

Anhand der folgenden Zeichnungen wird eine Ausführung der Erfindung näher erläutert.

Es zeigt:

Fig. 1    die gesamte Anordnung der Gangschaltvorrichtung,

Fig. 2    einen Schnitt entlang der Linie II-II aus Fig. 1 und

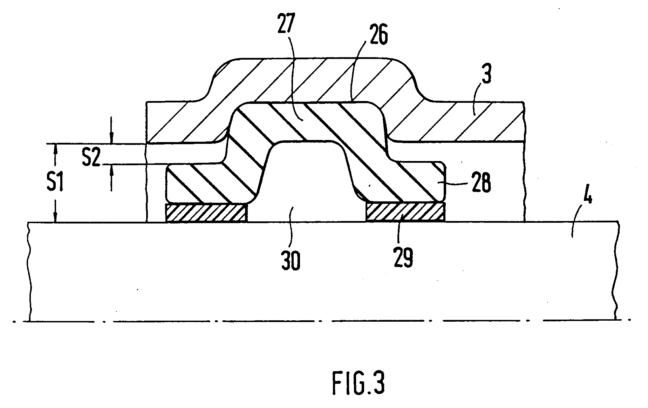

Fig. 3    eine Einzelheit X aus Fig. 1 in größerem Maßstab.

Ein Schalthebel **1** ist mit einem Lagerbolzen **2** drehbar in einer Führungsbuchse **3** gelagert. Die Führungsbuchse **3** ist verdreh- und verschiebbar mit einem radialen Spiel **S1** auf einem ortsfesten Führungsrohr **4** gelagert. Das Führungsrohr **4** ist mittels Hülsen **5** und darauf aufgesteckten Dichtungen **6** in ein Transaxlerohr **7** eingepreßt. Das Transaxlerohr **7** ist im Bereich des Schalthebels **1** oben und unten jeweils mit einer kreisförmigen Öffnung **8, 9** versehen. Das Transaxlerohr **7** ist weiterhin mit Dämpfungselementen **10** in einem Tunnel **11** gelagert. Eine Antriebswelle **12** verläuft zentral in der Führungsbuchse **3** und verbindet ein nicht gezeichnetes Getriebe mit einem nicht gezeichneten Achsantrieb. An den beiden freien Enden des die Führungsbuchse **3** durchdringenden Lagerbolzens **2** hängt ein um den Lagerbolzen **2** drehbarer, U-förmiger Bügel **13**, an dem senkrecht nach unten weisend ein Bolzen **14** befestigt ist. Auf dem Bolzen **14** ist eine zum Getriebe führende Schaltstange **15** drehbar gelagert. Ein mit dem Schalthebel **1** schwenkbares Kugelgelenk **16** besteht aus einer am Schalthebel **1** befestigten Kugel **17** und einer an einer Gelenkstange **18** befestigten Kugelpfanne **19**. Die Gelenkstange **18** trägt an ihrem anderen Ende eine weitere Kugelpfanne **20** eines ortsfesten Kugelgelenkes **21**, dessen Kugel **22** an der Unterseite des Transaxlerohres **7** befestigt ist.

Der Schalthebel **1** trägt an seinem oberen Ende einen Handgriff **23**. Die obere Öffnung **8** des Transaxlerohres **7** ist mit einem Faltenbalg **24** gegen Schmutzeintritt gesichert. Die untere Öffnung **9** ist mit einer kastenförmigen Abdeckung **25** verschlossen, die das schwenkbare Kugelgelenk **16** mit umschließt und mittels Faltenbälgen der Schaltstange **15** und der Gelenkstange **18** einen beweglichen, staubdichten Eintritt bietet.

In ringförmigen Vertiefungen **26** der zweiteiligen Führungsbuchse **3** sind radial geteilte Profilgummis **27** eingelegt. Sie überbrücken elastisch das radiale Spiel **S1** zwischen dem Führungsrohr **4** und der Führungsbuchse **3**. Die Profilgummis **27** enthalten Dichtlippen **28**, auf denen eine verschleißfeste Gleitschicht **29** aus Polytetrafluorethylen (PTFE) aufgebracht ist. Die Profilgummis **27** bilden weiterhin eine ringförmige Fettasche **30**, die mit einem Schmierfett gefüllt ist und damit die Führungsbuchse **3** wartungsfrei und leichtgängig auf dem Führungsrohr **4** lagert.

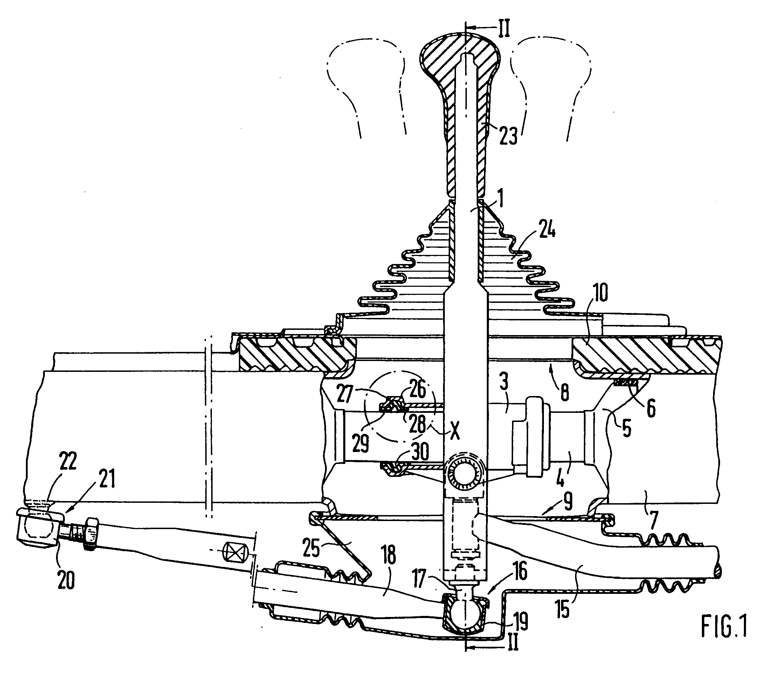

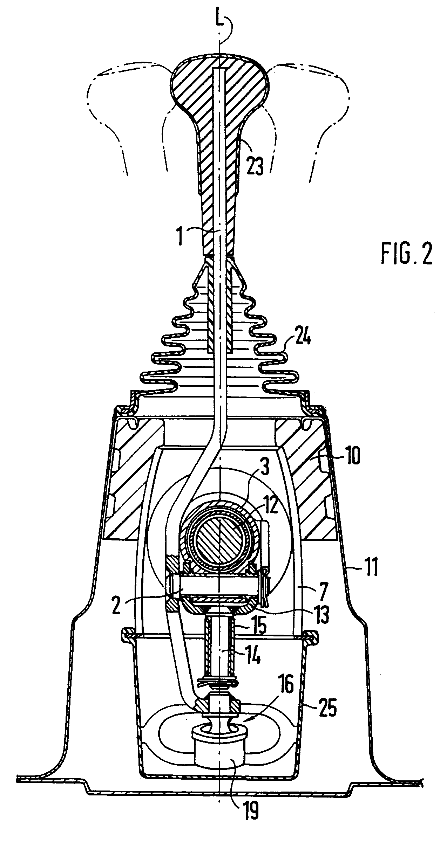

Fig. 1 und Fig. 2 zeigen den Schalthebel **1** in Neutralstellung, d. h. der

Schalthebel **1** steht in senkrechter Stellung und im rechten Winkel zum Transaxlerohr **7**. In dieser Stellung befindet sich ein radiales Spiel **S2** zwischen der Führungsbuchse **3** und den Profilgummis **27**. Weiterhin ist in Neutralstellung kein Gang geschaltet und der Schalthebel **1** steht in der Mitte der Vorwählgasse.

Zum Vorwählen eines Getriebeganges wird der Schalthebel **1** quer zur Fahrtrichtung geschwenkt, d. h., die Führungsbuchse **3** wird um das Führungsrohr **4** gedreht. Aufgrund des beengten Bauraumes ist die Auslenkbewegung des Kugelgelenkes **16** beim Schwenken des Schalthebels **1** gering. Bedingt durch die Länge der Schaltstange **15** wird dabei eine ausreichend große Bewegung eines Anlenkhebels am Getriebe erreicht. Die Länge der Gelenkstange **18** ist so bemessen, daß das Kugelgelenk **16** eine nahezu geradlinige Bewegung beim Schwenken des Schalthebels **1** ausführt.

Eine zu kurze Ausführung der Gelenkstange **18** hätte eine Überlagerung der kreisbogenförmigen Bewegungen der Kugel **17** um die Führungsbuchse **4** und der Kugelpfanne **19** um die ortsfeste Kugel **22** zur Folge. Dadurch würde der Schalthebel **1** mit der Schwenkbewegung zunehmend um seinen Lagerbolzen **2** kippen und somit die Schaltstange **15** bewegen. Durch die ausreichend lange Ausführung der Gelenkstange **18** wird diese Kippbewegung soweit begrenzt, daß lediglich das Spiel **S2** aufgehoben wird und der Schalthebel starr, aber durch die Profilgummis **27** gedämpft, anliegt.

Die Begrenzung der Schwenkbewegung des Schalthebels **1** erfolgt aus dem Getriebe. Während des Schwenkens ist das radiale Spiel **S2** auf dem vollen Umfang der Profilgummilippen **28** erhalten. Ist der Anschlag am linken oder rechten Ende der Vorwählgasse erreicht, verschwindet das Spiel **S2** auf der Hälfte des Umfanges der Profilgummis **27**. Dabei wird das Spiel **S2** vom Fahrer entgegen den elastischen Rückstellkräften der Profilgummis **27** aufgehoben.

Ein weiteres Schwenken des Schalthebels **1** ist nur noch sehr geringfügig durch Zusammendrük-ken der Profilgummis **27** möglich.
Dem Fahrer wird somit während des Vorwählens ein Schaltgefühl vermittelt, das Leichtgängigkeit um die Neutralstellung und zunehmende Bedienkräfte am Ende der Vorwählgasse aufweist.

In der Neutralstellung oder am Ende der Vorwählgasse ist das Durchschalten der Gänge möglich. Dazu wird der Schalthebel **1** mit der Führungsbuchse **3** auf dem Führungsrohr **4** verschoben. Der Schalthebel **1** stützt sich dabei an der starren Gelenkstange **18** ab. Der Lagerbolzen **2** ermöglicht die Drehbewegung zwischen dem Schalthebel **1** und der Führungsbuchse **3**. Ebenso dreht sich der Bügel **13** um den Lagerbolzen **2**, so daß der Bügel **13** mit dem Bolzen **14** in jeder Schaltstellung senkrecht zur Führungsbuchse **3** steht und die Schaltstange **15** somit verschoben, aber nicht verdreht wird.
Der Lagerbolzen **2** bewegt sich beim Schalten zunächst parallel zum Führungsrohr **4**, wodurch das Kugelgelenk **16** geringfügig, nahezu geradlinig nach oben bewegt wird. Ist ein Gang geschaltet, begrenzt die Schaltstange **15** ein weiteres Verschieben der Führungsbuchse **3**. Dabei wird wiederum das Spiel **S2** auf der Hälfte des Umfanges der Profilgummis **27** aufgehoben. Die Bedienkräfte nehmen dadurch am Ende der Schaltwege zu, so daß dem Fahrer das Einlegen des Ganges signalisiert wird.

Die vorbeschriebene Anordnung ermöglicht trotz engstem Bauraum ein exaktes Schalten aller Gänge. Die Lagerung der Führungsbuchse **3** mit reichlich radialem Spiel auf dem Führungsrohr **4** und das elastische Überbrücken dieses Spieles durch die Profilgummis **27** erlaubt grobe Toleranzen auf dem Führungsrohr **4** und in der Führungsbuchse **3**. Das zwischen den Profilgummis **27** und der Führungsbuchse **3** auftretende Spiel **S2** vermeidet Verklemmungen beim Verschieben der Führungsbuchse **3** und vermittelt dem Fahrer ein positives Schaltgefühl. Außerdem ermöglicht das Spiel **S2** zusammen mit den Profilgummis **27** eine starke Dämpfung der vom Getriebe über die Schaltstange **15** auf den Schalthebel **1** wirkenden Schwingungen. Das Fett in der Fettasche **30** bewirkt zusammen mit der verschleißfesten Gleitschicht **29** eine wartungsfreie, leichtgängige Lagerung auf dem Führungsrohr **4**.

## Patentansprüche

1. Gangschaltvorrichtung für ein Kraftfahrzeug-Getriebe, mit einem manuell zu betätigenden Schalthebel, der in einer ortsfesten Lagerung des Kraftfahrzeugrahmens gelagert ist und an den eine zum Getriebe führende Schaltstange angelenkt ist, dadurch gekennzeichnet, daß in einem eng begrenzten Bauraum der Schalthebel (1) mit einem in ihm befestigten Lagerbolzen (2) in einer Führungsbuchse (3) drehbar gelagert ist, wobei die Führungsbuchse (3) an einem ortsfesten Führungsrohr (4) verdreh- und verschiebbar mit reichlich Radialspiel (S1) gelagert ist, welches durch eine elastische Buchse (27) überbrückt ist, die zugleich zur Schwingungsabkopplung des Schalthebels (1) dient, und daß der Schalthebel (1) an seinem unteren Ende in einem Kugelgelenk (16) einer Gelenkstange (18) gelagert ist, die an ihrem anderen Ende in einem ortsfesten Kugelgelenk (21) gelagert ist.

2. Gangschaltvorrichtung nach Anspruch 1, dadurch gekennzeichnet, daß die elastische Buchse (27) aus radial geteilten Profilgummis (27) besteht, die in zwei ringförmige Vertiefungen (26) an den Enden der zweiteiligen Führungsbuchse (3) eingelegt sind, wobei die Profilgummis (27) eine ringförmige Fettasche (30) zur dauerhaften Schmierung der Führungsbuchse (3) bilden, und wobei im eingelegten Zustand der Profilgummis (27) ein radiales Spiel (S2) zwischen einer Dichtlippe (28) des Profilgummis (27) und der Führungsbuchse (3) vorhanden ist.

3. Gangschaltvorrichtung nach Anspruch 2, dadurch gekennzeichnet, daß auf den Innenflächen der Dichtlippen (28) eine Gleitschicht (29) aufgebracht ist, die an dem Führungsrohr (4) anliegt.

**4.** Gangschaltvorrichtung nach Anspruch 1, dadurch gekennzeichnet, daß an dem Lagerbolzen (2) ein Bügel (13) drehbar gelagert ist, an dem ein senkrecht nach unten stehender Bolzen (14) befestigt ist, auf dem eine zum Getriebe führende Schaltstange (15) drehbar gelagert ist.

**5.** Gangschaltvorrichtung nach Anspruch 4, dadurch gekennzeichnet, daß der Schalthebel (1) in einem Transaxlerohr (7) so angeordnet ist, daß eine Antriebswelle (12) zentral in der Führungsbuchse (3) verläuft, und daß das Kugelgelenk (21) an der Unterseite des Transaxlerohres (7) befestigt ist.

**6.** Gangschaltvorrichtung nach Anspruch 5, dadurch gekennzeichnet, daß der Schalthebel (1) an seinem oberen, aus dem Transaxlerohr (7) herausragenden und einen Handgriff (23) tragenden Teil gerade verläuft und daß er innerhalb des Transaxlerohres (7) U-förmig um die Führungsbuchse (3) und den Bolzen (14) verläuft, und daß in diesem Bereich ein Lagerbolzen (2) am Schalthebel (1) befestigt ist, der den Schalthebel (1) an der Führungsbuchse (3) drehbar lagert.

**7.** Gangschaltvorrichtung nach Anspruch 6, dadurch gekennzeichnet, daß der Schalthebel (1) in seinem oberen, gerade verlaufenden Teil eine als Mittelachse verlaufende Linie (L) aufweist, die in jeder Schaltstellung des Schalthebels (1) die Mittelachse der Antriebswelle (12) und den Mittelpunkt einer Kugel (17) des Kugelgelenks (16) schneidet.

**8.** Gangschaltvorrichtung nach Anspruch 7, dadurch gekennzeichnet, daß die Gelenkstange (18) an beiden Enden Kugelpfannen (19, 20) trägt, die jeweils eine Kugel (17, 22) des Kugelgelenkes (16) bzw. des Kugelgelenkes (21) aufnehmen, und daß die Gelenkstange (18) eine solche Länge besitzt, daß das Kugelgelenk (16) bei kleinen Schwenkbewegungen des Schalthebels (1) nahezu geradlinig bewegt wird.

**9.** Gangschaltvorrichtung nach Anspruch 3, dadurch gekennzeichnet, daß die Gleitschicht (29) eine auf die Profilgummis (27) vulkanisierte Schicht aus Polytetrafluorethylen ist.

**Claims**

**1.** A gearshift device for a motor vehicle transmission, having a gearshift lever which is to be operated manually and is mounted in a stationary mounting of the motor vehicle frame and on which a gearshift rod leading to the transmission is articulated, characterised in that in a narrow structural space, the gearshift lever (1) is rotatably mounted in a guide bush (3) by means of a bearing bolt (2) secured in the said gearshift lever (1), the guide bush (3) being mounted on a stationary guide tube (4) so as to be rotatable and displaceable with ample radial clearance (S1) which is bridged by a resilient bush (27) which simultaneously serves to effect the vibrational separation of the gearshift lever (1), and in that the gearshift lever (1) is mounted at its lower end in a ball-and-socket joint (16) of an articulated rod (18) which is mounted at its other end in a stationary ball-and-socket joint (21).

**2.** A gearshift device according to claim 1, characterised in that the resilient bush (27) comprises radially divided profiled rubber parts (27) which are inserted into two annular recesses (26) on the ends of the two-part guide bush (3), wherein the profiled rubber parts (27) form an annular grease pocket (30) for the continuous lubrication of the guide bush (3), and there is a radial clearance (S2) between a sealing lip (28) of the profiled rubber part (27) and the guide bush (3) when the profiled rubber parts (27) are in place.

**3.** A gearshift device according to claim 2, characterised in that a sliding layer (29), which contacts the guide tube (4), is applied to the inner surfaces of the sealing lips (28).

**4.** A gearshift device according to claim 1, characterised in that on the bearing bolt (2), a stirrup (13) is rotatably mounted, to which a bolt (14) directed vertically downwards is secured, on which a gearshift rod (15), leading to the transmission, is rotatably mounted.

**5.** A gearshift device according to claim 4, characterised in that the gearshift lever (1) is arranged in a transaxle tube (7) in such a way that a drive shaft (12) extends centrally in the guide bush (3), and in that the ball-and-socket joint (21) is secured to the underside of the transaxle tube (7).

**6.** A gearshift device according to claim 5, characterised in that the upper part of the gearshift lever (1), projecting from the transaxle tube (7) and having a grip (23), extends in a straight manner, and in that inside the transaxle tube (7), the said gearshift lever (1) extends in a U-shaped manner around the guide bush (3) and the bolt (14), and in that in this region, a bearing bolt (2) is secured to the gearshift lever (1) and rotatably mounts the gearshift lever (1) on the guide bush (3).

7. A gearshift device according to claim 6, characterised in that the gearshift lever (1) has, in its upper straight part, a line (L) extending as a central axis which intersects the central axis of the drive shaft (12) and the centre point of a ball (17) of the ball-and-socket joint (16) in each gearshift position of the gearshift lever (1).

8. A gearshift device according to claim 7, characterised in that the articulated rod (18) carries on both ends ball sockets (19, 20) which each accommodate a ball (17, 22) of the ball-and-socket joint (16) and the ball-and-socket joint (21) respectively, and in that the articulated rod (18) is of a length such that the ball-and-socket joint (16) is moved in a near straight line with small tilting movements of the gearshift lever (1).

9. A gearshift device according to claim 3, characterised in that the sliding layer (29) is a layer of polytetrafluoroethylene vulcanized onto the profiled rubber parts (27).

**Revendications**

1. Dispositif de commande de vitesse pour une boîte de vitesses d'un véhicule automobile, comportant un levier à actionner manuellement qui est monté dans un support fixe du châssis du véhicule et sur lequel s'articule une tringle de changement de vitesse, menant à la boîte de vitesses, caractérisé en ce que dans un espace de construction étroitement limité, le levier (1) avec un axe de palier (2), fixé sur celui-ci, est monté tournant dans une douille de guidage (3), la douille de guidage (3) étant montée de manière à pouvoir tourner et coulisser avec un jeu radial (S1) suffisant, sur un tube de guidage (4) fixe, le jeu radial étant franchi par une douille (27) élastique qui sert en même temps à amortir les oscillations du levier (1) et en ce que le levier (1) est monté, à son extrémité inférieure, dans un joint à rotule (16) d'un arbre de transmission (18) qui, à son autre extrémité, est monté dans un joint à rotule (21) fixe.

2. Dispositif de commande de vitesse selon la revendication 1, caractérisé en ce que la douille (27) élastique est constituée de caoutchoucs profilés (27), partagés radialement, qui sont placés dans deux creux (26) annulaire aux extrémités de la douille de guidage (3) en deux parties, les caoutchoucs profilés (27) formant une poche à graisse (30) annulaire pour la lubrification permanente de la douille de guidage (3) et, à l'état inséré des caoutchoucs profilés (27), un jeu radial (S2) existant entre une lèvre d'étanchéité (28) du caoutchouc profilé (27) et de la douille de guidage (3).

3. Dispositif de commande de vitesse selon la revendication 2, caractérisé en ce que sur les surfaces intérieures des lèvres d'étanchéité (28) il est appliqué une couche de glissement (29) qui s'applique contre le tube de guidage (4).

4. Dispositif de commande de vitesse selon la revendication 1, caractérisé en ce que sur l'axe de palier (2) est monté tournant un étrier (13) sur lequel est fixé un axe (14), dirigé vers le bas, sur lequel est montée tournante une tringle de commande (15) menant à la boîte de vitesses.

5. Dispositif de commande de vitesse selon la revendication 4, caractérisé en ce que le levier (1) est placé dans un tube de transmission (7), de manière qu'un arbre moteur (12) s'étende au centre dans la douille de guidage (3) et en ce qu'un joint à rotule (21) est fixé sur la face inférieure du tube (7).

6. Dispositif de commande de vitesse selon la revendication 5, caractérisé en ce que le levier (1) s'étend en ligne droite sur sa partie supérieure, ressortant du tube (7) et portant une poignée (23) et en ce qu'il s'étend à l'intérieur du tube (7) en U, autour de la douille de guidage (3) et de l'axe (14) et en ce que dans cette zone, il est fixé sur le levier (1), un axe de palier (2) qui permet au levier (1) de tourner sur la douille de guidage (3).

7. Dispositif de commande de vitesse selon la revendication 6, caractérisé en ce que le levier (1) présente dans sa partie supérieure, s'étendant en ligne droite, une ligne (L) servant d'axe médian qui dans toute position du levier (1), coupe l'axe médian de l'arbre moteur (12) et le centre d'une rotule (17) du joint à rotule (16).

8. Dispositif de commande de vitesse selon la revendication 7, caractérisé en ce que l'arbre de transmission (18) porte à ses deux extrémités, des coussinets sphériques (19, 20) qui logent chacun une rotule (17, 22) du joint à rotule (16) ou du joint à rotule (21) et en ce que l'arbre de transmission (18) a une longueur telle que le joint à rotule (16) se déplace pratiquement en ligne droite dans le cas de petits pivotements du levier (1).

9. Dispositif de commande de vitesse selon la revendication 3, caractérisé en ce que la couche de glissement (29) est une couche en polytétrafluoréthylène, vulcanisée sur les caoutchoucs profilés (27).

FIG.1

FIG. 2

FIG.3